# EUROPÄISCHE PATENTSCHRIFT

(11) **EP 1 255 947 B1**
(45) Veröffentlichungstag und Bekanntmachung des Hinweises auf die Patenterteilung: **11.10.2006**
(21) Anmeldenummer: 01913808.0
(22) Anmeldetag: 09.02.2001
(51) Int. Cl.: F17C 9/02, F17C 13/02, F17C 6/00

(54) **VERFAHREN ZUM ABSPERREN EINES SPEICHERBEHÄLTERS SOWIE SPEICHERBEHÄLTERSYSTEM**
METHOD FOR SEALING A STORAGE CONTAINER AND STORAGE CONTAINER SYSTEM
PROCEDE POUR OBTURER UN RESERVOIR DE STOCKAGE, ET SYSTEME DE RESERVOIR DE STOCKAGE

(30) Priorität: 09.02.2000 DE 10005726
(43) Veröffentlichungstag der Anmeldung: 13.11.2002
(73) Patentinhaber: Linde Aktiengesellschaft, 65189 Wiesbaden (DE)
(72) Erfinder: MACK, Klaus, Dieter, 83607 Holzkirchen (DE)
(74) Vertreter: Zahn, Christoph
(86) Internationale Anmeldenummer: PCT/EP2001/001450
(87) Internationale Veröffentlichungsnummer: WO 2001/059357

(56) Entgegenhaltungen:
- EP-A- 0 779 468
- FR-A- 2 682 175
- US-A- 5 685 159
- US-A- 5 823 235

## Beschreibung

Die Erfindung betrifft ein Verfahren zum Absperren eines Speicherbehälters, insbesondere eines Speicherbehälters für die Speicherung von gasförmigen und/oder flüssigen kryogenen Medien, siehe z.B. US-A-5 685 159 wobei der Speicherbehälter wenigstens eine Befüllleitung und wenigstens eine Rückgasleitung aufweist.

Die Erfindung betrifft femer ein Speicherbehältersystem, insbesondere für die Speicherung von gasförmigen und/oder flüssigen kryogenen Medien, aufweisend wenigstens einen Speicherbehälter, sowie wenigstens eine Befüllleitung und wenigstens eine Rückgasleitung, die mit dem Speicherbehälter verbunden oder verbindbar sind.

Im folgenden werden bei den Bezeichnungen spezieller kryogener Medien entsprechend ihrem Aggregatzustand die Buchstaben "G" für "gasförmig" und "L" für "flüssig" bzw. "liquid" vorangestellt; also z. B. GH₂ bzw. LH₂ für gasförmigen bzw. flüssigen Wasserstoff.

Insbesondere Wasserstoff gewinnt gegenwärtig durch den steigenden Energiebedarf und das gestiegene Umweltbewußtsein als Energieträger zunehmend an Bedeutung. So sind erste Versuche im Gange, Flugzeuge, Lastkraftwagen, Busse sowie Personenkraftwagen mittels mit Wasserstoff-betriebener Turbinen bzw. Motoren anzutreiben. Auch Erdgas, insbesondere verflüssigtes Erdgas, wird bereits in Feldversuchen zum Antreiben von Bussen und Personenkraftwagen verwendet.

Die Speicherung des Wasserstoffs oder Erdgases "an Bord" der oben genannten Verkehrsmittel ist dabei in flüssiger Form am sinnvollsten. Zwar muss, z. B. im Falle des Wasserstoffs, dieser dazu auf etwa 25 K abgekühlt und auf dieser Temperatur gehalten werden, was nur durch entsprechende Isoliermaßnahmen an den Speicherbehältern bzw. -tanks zu erreichen ist, doch ist eine Speicherung in gasförmigem Zustand aufgrund der geringen Dichte von GH₂ in der Regel in den obengenannten Verkehrsmitteln ungünstiger, da die Speicherung hierbei in großvolumigen Speicherbehältern bei hohen Drücken erfolgen muss.

Bei dem Betrieb von Kraftfahrzeugen, die mit einem kryogenen Medium, wie beispielsweise Wasserstoff oder Erdgas betrieben werden, stellen Unfälle ein hohes Sicherheitsrisiko dar. Die Absperrung der Speicherbehälter zu der Atmosphäre erfolgt bisher mittels entsprechender Absperrarmaturen an dem Befüllanschluß. Dieser ist im Regelfall unmittelbar hinter der Tankklappe des Fahrzeuges angeordnet. Der Befüllanschluß ist über ein flexibles Anschlußstück, in dem sowohl die Befüll- als auch die Rückgasleitung angeordnet sind, an den Kraftfahrzeug-Speicherbehälter angeschlossen. Kommt es nunmehr bei einem Unfall des Kraftfahrzeuges zu einem Abreißen der Befüll- oder Rückgasleitung von dem Kraftfahrzeug-Speicherbehälter, so kann ein Ausströmen von flüssigem und/oder gasförmigem Medium aus dem Speicherbehälter nicht verhindert werden.

Aufgabe der vorliegenden Erfindung ist es, ein Verfahren zum Absperren eines Speicherbehälters sowie ein Speicherbehältersystem anzugeben, die die genannten Nachteile vermeiden und das insbesondere die Realisierung einer Notabsperrung ohne Fremdenergie ermöglichen.

Unter dem Begriff "Fremdenergie" sei hierbei auch die von einem Kraftfahrzeug-Bordsystem zur Verfügung gestellte Energie zu verstehen.

Das erfindungsgemäße Verfahren zum Absperren eines Speicherbehälters ist dadurch gekennzeichnet, dass im Falle eines Druckabfalles in der Befüllleitung ein in der Befüllleitung angeordnetes Rückschlagventil schließt und eine in der Rückgasleitung angeordnete Absperrvorrichtung, die über den in der Befüllleitung stromaufwärts von dem Rückschlagventil herrschenden Druck gesteuert wird, ebenfalls schließt.

Das erfindungsgemäße Speicherbehältersystem, das insbesondere für die Speicherung von gasförmigen und/oder flüssigen kryogenen Medien geeignet ist, zeichnet sich dadurch aus, dass in der Befüllleitung ein Rückschlagventil und in der Rückgasleitung ein über den in der Befüllleitung stromaufwärts von dem Rückschlagventil herrschenden Druck steuerbare Absperrvorrichtung angeordnet sind.

Aufgrund des erfindungsgemäßen Verfahrens zum Absperren eines Speicherbehälters sowie des erfindungsgemäßen Speicherbehältersystems werden nicht nur die oben angeführten Nachteile vermieden; es wird darüber hinaus - wie im Folgenden noch erläutert werden wird - die Realisierung einer Notabsperrung, die ohne Fremdenergie funktioniert, ermöglicht.

Das erfindungsgemäße Verfahren zum Absperren eines Speicherbehälters weiterbildend wird vorgeschlagen, dass die in der Rückgasleitung angeordnete Absperrvorrichtung als ein membrangesteuertes Ventil ausgebildet ist und dieses über den in der Befüllleitung stromaufwärts von dem Rückschlagventil herrschenden Druck gesteuert wird.

Entsprechend einer Ausgestaltung des erfindungsgemäßen Speicherbehältersystems ist die steuerbare Absperrvorrichtung vorzugsweise als ein membrangesteuertes Ventil ausgebildet.

Bei dieser Ausgestaltung des erfindungsgemäßen Verfahrens zum Absperren eines Speicherbehälters bzw. des erfindungsgemäßen Speicherbehältersystems steuert der in der Befüllleitung stromaufwärts von dem Rückschlagventil herrschende Druck unmittelbar die in der Rückgasleitung angeordnete Absperrvorrichtung, indem beispielsweise das in der Rückgasleitung angeordnete, membrangesteuerte Ventil über eine Verbindungsleitung mit der Befüllleitung verbunden ist.

Eine weitere vorteilhafte Ausgestaltung des erfindungsgemäßen Verfahrens zum Absperren eines Speicherbehälters zeichnet sich dadurch aus, dass die in der Rückgasleitung angeordnete Absperrvorrichtung über einen, den in der Befüllleitung stromaufwärts von dem Rückschlagventil herrschenden Druck erfassenden Druckaufnehmer gesteuert wird.

Das erfindungsgemäße Speicherbehältersystem ausgestaltend wird vorgeschlagen, dass in der Befüllleitung stromaufwärts von dem Rückschlagventil wenigstens eine Druckaufnahmevorrichtung angeordnet ist.

Dadurch wird eine mittelbare Ansteuerung der in der Rückgasleitung angeordneten Absperrvorrichtung ermöglicht.

Eine weitere vorteilhafte Ausgestaltung des erfindungsgemäßen Speicherbehältersystems ist dadurch gekennzeichnet, dass das Rückschlagventil und/oder die Absperrvorrichtung räumlich so nahe als möglich an dem Speicherbehälter angeordnet ist bzw. sind.

Diese Ausgestaltung des erfindungsgemäßen Speicherbehältersystems hat den Vorteil, dass aufgrund der räumlichen Nähe von Rückschlagventil und/oder Absperrvorrichtung zu dem Speicherbehälter auch bei einem Leitungsbruch bzw. einer Beschädigung der Leitung nahe am Speicherbehälter eine Notabsperrung gewährleistet werden kann.

Abhängig von der Art des zu speichernden Mediums kann es zweckmäßig sein, den Speicherbehälter von einem Isolationsbehälter zu umgeben. Vorzugsweise werden bei einer derartigen Konstruktion das Rückschlagventil und/oder die Absperrvorrichtung innerhalb dieses Isolationsbehälters angeordnet.

Denkbar ist femer, dass - entsprechend einer weiteren vorteilhaften Ausgestaltung des erfindungsgemäßen Speicherbehältersystems - das Rückschlagventil und/oder die Absperrvorrichtung innerhalb eines gemeinsamen separaten Isolationsbehälters oder in getrennten separaten Isolationsbehältern, der bzw. die vorzugsweise einen Vakuumraum definieren, angeordnet ist bzw. sind.

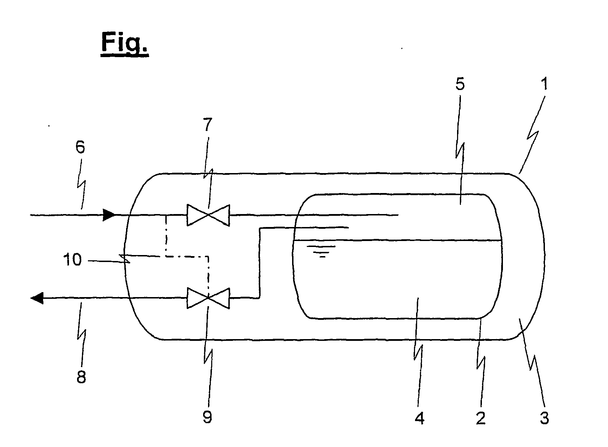

Das erfindungsgemäße Verfahren zum Absperren eines Speicherbehälters, das erfindungsgemäße Speicherbehältersystem sowie weitere Ausgestaltungen des Verfahrens sowie des Speicherbehältersystems seien anhand des in der Figur dargestellten Ausführungsbeispieles näher erläutert.

Die in der Figur dargestellte Ausführungsform des erfindungsgemäßen Verfahren zum Absperren eines Speicherbehälters sowie des erfindungsgemäßen Speicherbehältersystems eignet sich insbesondere für die Verwendung in einem Kraftfahrzeug zur Speicherung von LH₂ oder LNG.

Das Speicherbehältersystem besteht aus dem eigentlichen Speicherbehälter 2, der in dem Vakuumraum 3 des isolationsbehälters 1 angeordnet ist. Über wenigstens eine Befüllleitung 6 wird dem Speicherbehälter 2 das zu speichemde Medium zugeführt.

Während des Befüllvorganges wird über wenigstens eine Rückgasleitung 8 in dem Speicherbehälter 2 entstehendes Gas abgezogen und entweder an die Atmosphäre abgegeben oder einer Rückverflüssigung zugeführt. Innerhalb des Speicherbehälters 2 befindet sich eine Flüssigphase 4 sowie ein darüber angeordnetes Gaspolster 5.

Erfindungsgemäß ist nunmehr in der Befüllleitung 6 ein Rückschlagventil 7 angeordnet. In der Rückgasleitung 8 ist zudem ein membrangesteuertes Ventil 9 angeordnet, das über eine, in der Figur strichpunktiert dargestellte Leitung 10 mit dem in der Befüllleitung 6 herrschenden Druck beaufschlagt und so durch diesen gesteuert wird.

Kommt es nunmehr zu einer Beschädigung der Befüllleitung 6 stromaufwärts von dem Rückschlagventil 7, so fällt in der Befüllleitung 6 der Druck ab, wodurch das Rückschlagventil 7 geschlossen wird. Ein Ausströmen des in dem Speicherbehälter 2 gespeicherten Mediums über die Befüllleitung 6 aus dem Speicherbehälter 2 wird durch das Schließen des Rückschlagventiles 7 verhindert. Gleichzeitig wird über die Leitung 10 auch das membrangesteuerte Ventil 9 derart angesteuert, dass es in seine Schließposition schaltet. Dadurch wird sichergestellt, dass auch ein Ausströmen von kryogenem Medium aus dem Speicherbehälter 2 über die Rückgasleitung 8 nicht möglich ist.

Da das in der Rückgasleitung 8 angeordnete, membrangesteuerte Ventil 9 unmittelbar durch den in der Befüllleitung 6 stromaufwärts von dem Rückschlagventil 7 herrschenden Druck angesteuert wird, kann eine Notabsperrung ohne Einsatz von Fremdenergie realisiert werden. Ein derartiges System eignet sich daher insbesondere für die Verwendung in Kraftfahrzeugen, bei denen es im Falle eines Unfalles zu einem Ausfall des Bord-eigenen Energiesystemes kommen kann oder das aus Sicherheitsgründen abgeschaltet wird.

## Patentansprüche

1. Verfahren zum Absperren eines Speicherbehälters (1), insbesondere eines Speicherbehälters für die Speicherung von gasförmigen und/oder flüssigen kryogenen Medien, wobei der Speicherbehälter (1) wenigstens eine Befüllleitung (6) und wenigstens eine Rückgasleitung (8) aufweist, **dadurch gekennzeichnet, dass** im Falle eines Druckabfalles in der Befüllleitung (6) ein in der Befüllleitung (6) angeordnetes Rückschlagventil (7) schließt und eine in der Rückgasleitung (8) angeordnete Absperrvorrichtung (9), die über den in der Befüllleitung (6) stromaufwärts von dem Rückschlagventil (7) herrschenden Druck gesteuert wird, ebenfalls schließt.

2. Verfahren nach Anspruch 1, **dadurch gekennzeichnet, dass** die in der Rückgasleitung (8) angeordnete Absperrvorrichtung als ein membrangesteuertes Ventil (9) ausgebildet ist und dieses über den in der Befüllleitung (6) stromaufwärts von dem Rückschlagventil (7) herrschenden Druck gesteuert wird.

3. Verfahren nach Anspruch 1 oder 2, **dadurch gekennzeichnet, dass** die in der Rückgasleitung (8) angeordnete Absperrvorrichtung über einen, den in der Befüllleitung (6) stromaufwärts von dem Rückschlagventil (7) herrschenden Druck erfassenden Druckaufnehmer gesteuert wird.

4. Speicherbehältersystem, insbesondere für die Speicherung von gasförmigen und/oder flüssigen kryogenen Medien, aufweisend wenigstens einen Speicherbehälter (1), sowie wenigstens eine Befüllleitung (6) und wenigstens eine Rückgasleitung (8), die mit dem Speicherbehälter (1) verbunden oder verbindbar sind, **dadurch gekennzeichnet, dass** in der Befüllleitung (6) ein Rückschlagventil (7) und in der Rückgasleitung (8) ein über den in der Befüllleitung (6) stromaufwärts von dem Rückschlagventil (7) herrschenden Druck steuerbare Absperrvorrichtung (9) angeordnet sind.

5. Speicherbehältersystem nach Anspruch 4, **dadurch gekennzeichnet, dass** die steuerbare Absperrvorrichtung als ein membrangesteuertes Ventil (9) ausgebildet ist.

6. Speicherbehältersystem nach Anspruch 4 oder 5, **dadurch gekennzeichnet, dass** in der Befüllleitung (6) stromaufwärts von dem Rückschlagventil (7) wenigstens eine Druckaufnahmevorrichtung angeordnet ist.

7. Speicherbehältersystem nach einem der Ansprüche 4 bis 6, **dadurch gekennzeichnet, dass** das Rückschlagventil (7) und/oder die Absperrvorrichtung räumlich so nahe als möglich an dem Speicherbehälter (2) angeordnet ist/sind.

8. Speicherbehältersystem nach einem der Ansprüche 4 bis 7, **dadurch gekennzeichnet, dass** der Speicherbehälter (2) von einem Isolationsbehälter (1) umgeben ist.

9. Speicherbehältersystem nach Anspruch 8, **dadurch gekennzeichnet, dass** das Rückschlagventil (7) und/oder die Absperrvorrichtung innerhalb des isolationsbehälters (1) angeordnet ist/sind.

10. Speicherbehältersystem nach einem der Ansprüche 4 bis 9, **dadurch gekennzeichnet, dass** das Rückschlagventil (7) und/oder die Absperrvorrichtung innerhalb eines gemeinsamen separaten isolationsbehälters oder in getrennten separaten isolationsbehältern, der bzw. die vorzugsweise einen Vakuumraum definieren, angeordnet ist/sind.

## Claims

1. Method for sealing a storage container (1), in particular a storage container for the storage of gaseous and/or liquid cryogenic media, whereby the storage container (1) comprises at least one filling line (6) and at least one gas return line (8), **characterized in that** in the case of a pressure drop in the filling line (6), a non-return valve (7) disposed in the filling line (6) closes and a sealing device (9), which is disposed in the gas return line (8) and is controlled by the pressure in the filling line (6) upstream of the non-return valve (7), also closes.

2. Method according to Claim 1, **characterized in that** the sealing device disposed in the gas return line (8) is configured as a diaphragm controlled valve (9) which is controlled via the pressure in the filling line (6) upstream of the non-return valve (7).

3. Method according to Claim 1 or 2, **characterized in that** the sealing device disposed in the gas return line (8) is controlled via a pressure sensor which measures the pressure in the filling line (6) upstream of the non-return valve (7).

4. Storage container system, in particular for the storage of gaseous and/or liquid cryogenic media, comprising at least one storage container (1), as well as at least one filling line (6) and at least one gas return line (8), which are connected or connectable to the storage container (1), **characterized in that** a non-return valve (7) is disposed in the filling line (6) and a sealing device (9), which is controlled by the pressure in the filling line (6) upstream of the non-return valve (7), is disposed in the gas return line (8).

5. Storage container system according to Claim 4, **characterized in that** the controllable sealing device is configured as a diaphragm controlled valve (9).

6. Storage container system according to Claim 4 or 5, **characterized in that** at least one pressure sensing device is disposed in the filling line (6) upstream of the non-return valve (7).

7. Storage container system according to one of Claims 4 to 6, **characterized in that** the non-return valve (7) and/or the sealing device is/are spatially disposed as close as possible to the storage container (2).

8. Storage container system according to one of Claims 4 to 7, **characterized in that** the storage container (2) is surrounded by an insulation container (1).

9. Storage container system according to Claim 8, **characterized in that** the non-return valve (7) and/or the sealing device is/are disposed inside the insulation container (1).

10. Storage container system according to one of Claims 4 to 9, **characterized in that** the non-return valve (7) and/or the sealing device is/are disposed inside a common discrete insulation container or in separate discrete insulation containers, which preferably define a vacuum space.

## Revendications

1. Procédé pour fermer un réservoir de stockage (1), notamment un réservoir de stockage destiné à stocker des fluides cryogéniques sous forme gazeuse et/ou liquide, le réservoir de stockage (1) présentant au moins une conduite de remplissage (6) et au moins une conduite de retour de gaz (8), **caractérisé en ce qu'**en cas de chute de pression dans la conduite de remplissage (6), un clapet anti-retour (7) disposé dans la conduite de remplissage (6) se ferme et un dispositif de fermeture (9) disposé dans la conduite de retour de gaz (8) qui est commandé par la pression qui règne dans la conduite de remplissage (6) en amont du clapet anti-retour (7) se ferme également.

2. Procédé selon la revendication 1, **caractérisé en ce que** le dispositif de fermeture disposé dans la conduite de retour de gaz (8) est réalisé sous la forme d'une vanne commandée par membrane (9) et celle-ci est commandée par le biais de la pression qui règne dans la conduite de remplissage (6) en amont du clapet anti-retour (7).

3. Procédé selon la revendication 1 ou 2, **caractérisé en ce que** le dispositif de fermeture disposé dans la conduite de retour de gaz (8) est commandé par le biais d'un capteur de pression qui détecte la pression qui règne dans la conduite de remplissage (6) en amont du clapet anti-retour (7).

4. Système de réservoir de stockage, notamment pour le stockage de fluides cryogéniques sous forme gazeuse et/ou liquide, présentant au moins un réservoir de stockage (1) ainsi qu'au moins une conduite de remplissage (6) et au moins une conduite de retour de gaz (8), lesquelles sont reliées ou peuvent être reliées avec le réservoir de stockage (1), **caractérisé en ce qu'**un clapet anti-retour (7) est disposé dans la conduite de remplissage (6) et un dispositif de fermeture (9) pouvant être commandé par la pression qui règne dans la conduite de remplissage (6) en amont du clapet anti-retour (7) est disposé dans la conduite de retour de gaz (8).

5. Système de réservoir de stockage selon la revendication 4, **caractérisé en ce que** le dispositif de fermeture commandable est réalisé sous la forme d'une vanne commandée par membrane (9).

6. Système de réservoir de stockage selon la revendication 4 ou 5, **caractérisé en ce qu'**au moins un dispositif d'acquisition de la pression est disposé dans la conduite de remplissage (6) en amont du clapet anti-retour (7).

7. Système de réservoir de stockage selon l'une des revendications 4 à 6, **caractérisé en ce que** le clapet anti-retour (7) et/ou le dispositif de fermeture est/sont disposé(s) le plus près possible dans l'espace du réservoir de stockage (2).

8. Système de réservoir de stockage selon l'une des revendications 4 à 7, **caractérisé en ce que** le réservoir de stockage (2) est entouré par un réservoir isolant (1).

9. Système de réservoir de stockage selon la revendication 8, **caractérisé en ce que** le clapet anti-retour (7) et/ou le dispositif de fermeture est/sont disposé(s) à l'intérieur du réservoir isolant (1).

10. Système de réservoir de stockage selon l'une des revendications 4 à 9, **caractérisé en ce que** le clapet anti-retour (7) et/ou le dispositif de fermeture est/sont disposé(s) à l'intérieur d'un réservoir isolant séparé commun ou dans des réservoirs isolants séparés isolés qui définit/définissent de préférence un espace sous vide.
